# EUROPEAN PATENT APPLICATION

(11) **EP 1 386 545 A1**
(43) Date of publication of application: **04.02.2004**
(21) Application number: 03023389.4
(22) Date of filing: 08.08.1996
(51) Int. Cl.: A23L 1/29, A23L 1/30

(54) **High energy nutritive composition**

(30) Priority: 08.08.1995 NZ 27273995
(62) Divisional of application: 96927214.5
(71) Applicant: Fonterra Tech Limited, Auckland (NZ)
(72) Inventor: Beyer, Richard, P.O. Box 1168 Suwa (FJ); Cox, Charlotte Mary Ann, Dunedin (NZ)
(74) Representative: Chapman, Paul William

(57) **Abstract**

High energy dietary supplements which include fat which is at least partially hydrolysed and in which about 40 % to about 55 % of the total energy of the supplement is provided by the fat. The supplements preferably also include one or more non-toxic emulsifiers. The fat is preferably partially hydrolysed milk fat. The supplements also optionally contain other conventional nutritive components such as a carbohydrate source, a texture modifier, sweeteners and flavouring agents. The supplements may be provided either in liquid, semi-solid or solid form, and are believed to be particularly suitable for consumption by endurance athletes.

## Description

### TECHNICAL FIELD

This invention relates to high energy dietary supplements, which are particularly suitable for consumption by endurance athletes.

### BACKGROUND ART

High carbohydrate diets are widely recommended to endurance athletes since they are believed to enhance physical performance (Costill, D, Am J Clin Nutr 34: 1831-1836 (1982)). The energy expenditure involved in training and competing for endurance and ultra endurance events (events greater than 90 minutes and between 4 and 24 hours respectively) can be so great (22.9-75.2 MJ/day or 5,500 to 18,000 kcal/day (Kreider, R B, Int J Sports Nutr) 1:3-27 (1991)) that many athletes find difficulty in complying with this recommendation unless large quantities of extrinsic sugars are consumed. For these reasons the most popular liquid nutrition formulae commercially available to athletes are composed predominantly of carbohydrate.

A diet relatively high in fat provides an alternative means of achieving a high intake of energy. However high fat diets are not recommended to endurance athletes because high carbohydrate intakes are considered necessary to achieve maximum glycogen stores and because previous studies have reported gastrointestinal distress (Rehrer, N, Int J Sports Nutr 2: 48-59, 1992) during exercise after consumption of high fat foods. This justification is not soundly based since few studies have reliably compared the effects of dietary intake on performance and since previous studies reporting gastrointestinal distress after high fat food consumption have tested traditional high fat solid foods and concentrated medium-chain-triglyceride (MCT) solutions.

The applicants have successfully trialed a high-fat high-energy dietary supplement in a group of endurance-trained road cyclists. The applicants have found that the gastrointestinal distress previously associated with exercising after traditional high fat foods can be overcome. Furthermore endurance capacity after consumption of the high energy dietary supplement was not compromised.

It is this high-fat high-energy dietary supplement which is the focus of the present invention.

### SUMMARY OF THE INVENTION

Accordingly, in a first aspect the present invention may broadly be said to consist in a high energy dietary supplement which includes fat which is at least partially hydrolysed and wherein from about 40% to about 55% of the total energy of the supplement is provided by the fat.

Preferably, the dietary supplement includes one or more non-toxic emulsifiers.

Most conveniently, the fat comprises partially hydrolysed milk fat.

Preferably the milk fat is partially hydrolysed anhydrous milk fat.

The dietary supplement will also include other conventional nutritive components such as a carbohydrate source, texture modifiers, sweeteners and flavouring agents to enhance palatability.

The high energy dietary supplement can be provided in the form of a solid, a semi-solid or a liquid.

In one preferred form of the invention, the dietary supplement is in the form of a liquid.

Preferably, in this form of the invention, the emulsifiers are a mixture of monoacetyl and diacetyl tartaric acid ester of mono/diglycerides, glycerol monostearate, lecithin and concentrated medium chain triglycerides.

Preferably, the emulsifiers are present in the following relative amounts:
about 65.2% concentrated medium chain triglycerides, about 17.4% glycerol monostearate, about 13.0% monoacetyl and diacetyl tartaric acid ester of mono/diglycerides and about 4.3% lecithin.

Preferably, the emulsifiers are present in a combined amount of about 35.4% by weight of the partially hydrolysed anhydrous milk fat (or about 26.1% of the combined weight of the emulsifiers and partially hydrolysed anhydrous milk fat).

Preferably, the emulsifiers and the partially hydrolysed anhydrous milk fat are present in combined amount of 8.8% by weight of the supplement.

In this form of the invention, the liquid high energy dietary supplement preferably further comprises water, maltodextrin, fructose, milk protein isolate, sodium citrate, maltol and a flavouring component.

Preferably, the supplement has the following formulation:

| **Component** | **% Bv Weight of Total Composition** |
|---|---|
| maltodextrin (Maltrin M200™) | 9.0% |
| fructose | 6.8% |
| milk protein isolate (TMP 1180™) | 5.0% |
| sodium citrate | 0.4% |
| partially hydrolysed milk fat | 8.8% |
| plus emulsifiers | |
| maltol | 0.1% |
| flavour | 0.4% |
| water | 69.5% |

In another preferred embodiment of the invention, the supplement is in the form of a dry drink base suitable for addition to a liquid (such as water or milk).

In yet another preferred embodiment of the invention, the supplement is in the form of a solid, preferably a snack bar.

Preferably, in this form of the invention, the emulsifier is glycerol monostearate, which preferably has a residual soap content of 2%.

Preferably, the emulsifier is present in an amount of 26.4% by weight of the partially hydrolysed anhydrous milk fat (or 20.9% of the combined weight of the glycerol monostearate and the partially hydrolysed anhydrous milk fat).

Preferably, the partially hydrolysed anhydrous milk fat is present in an amount of 20.24% by weight of the snack bar.

Preferably, the glycerol monostearate is present in an amount of 4.7% to 6.9% by weight of the snack bar.

In this form of the invention, the high energy dietary supplement preferably further comprises fructose, glucose syrup, whey proteins, modified starch, water, maltodextrin, sodium citrate, citric acid, carrageenan, calcium citrate, maltol and flavour.

Preferably, the snack bar comprises the following components in the proportions set out below:

| **Component** | % **(By Weight)** |
|---|---|
| fructose | 17.0% to 22.09% |
| glucose syrup | 20.5% to 21.06% |
| partially hydrolysed anhydrous milk fat | 20.24% |
| whey protein (Alacen 152™) | 10.0% to 10.6% |
| modified starch (TB 840™) | 5.0% to 7.2% |
| whey protein (Alacen 312™) | 6.2% to 6.4% |
| glycerol monostearate | 4.7% to 6.9% |
| water | 3.29% |
| maltodextrin (Maltrin M100™) | 2.0% to 4.4% |
| sodium citrate | 0.3% to 1.0% |
| citric acid | 0.2% to 0.5% |
| carrageenan | 0.1 % to 1.0% |
| maltol (Veltol™) | 0.15% |
| calcium citrate | 0.05% to 0.16% |
| vanilla flavour | 0.3% to 0.8% |

Preferably, the snack bar has the following formulation:

| **Component** | **% (By Weight)** |
|---|---|
| fructose | 22.09% |
| glucose syrup | 21.06% |
| partially hydrolysed anhydrous milk fat | 20.24% |
| whey protein (Alacen 152™) | 10.27% |
| modified starch (TB 840™) | 6.99% |
| whey protein (Alacen 312™) | 6.37% |
| glycerol monostearate | 5.34% |
| water | 3.29% |
| maltodextrin (Maltrin M100™) | 2.26% |
| sodium citrate | 0.62% |
| citric acid | 0.41 % |
| carrageenan | 0.41 % |
| maltol (Veltol™) | 0.15% |
| calcium citrate | 0.08% |
| vanilla flavour | 0.41% |

### DETAILED DESCRIPTION OF THE INVENTION

Preferred forms of the present invention will now be described in more detail.

The high energy dietary supplements of the present invention contain fat as an essential component. This fat must also meet two essential criteria. First, it must be partially hydrolysed. By this it is meant that the fat component cannot be entirely in the form of triglycerides. There must be at least some diglycerides or monoglycerides (and preferably both) present. It is also preferred that some free fatty acids are present in the partially hydrolysed fat, and that the free fatty acids are preferably in the form of salts, such as sodium salts. Therefore, as used herein, the term "partially hydrolysed fat" means any fat which comprises a mixture of triglycerides with diglycerides and/or monoglycerides, whether or not obtained by a process in which partial hydrolysis of triglycerides has actually been effected.

The second essential criterion is that the fat must be present in the supplement in an amount sufficient to provide from 40% to 55%, more preferably 48% to 50%, of the total energy of the supplement. It is believed by the applicants that within this range, the partially hydrolysed fat will provide sufficient energy to sustain an athlete ingesting a relatively small amount of material, while at the same time allowing the supplement to remain palatable and, with the assistance of the other components of the supplement, quickly digestible. The total energy of the supplement, and the proportion contributed by the fat, may be measured using standard techniques, such as bomb calorimetry to obtain an experimental estimate of energy, or Atwater conversion figures to obtain a theoretical value based on the proportion of fat, carbohydrate and protein present: fat contains 37 kJ/g, carbohydrate 16 kJ/g, and protein 17kJ/g.

It is also most preferred that the dietary supplements of the present invention contain one or more non-toxic emulsifiers. The emulsifier(s) can either be added separately to other components of the dietary supplement, or can instead first be incorporated into the partially hydrolysed fat, for subsequent addition to other components of the dietary supplement.

The fat can be from any source appropriate for use in a dietary product. It can be fat from a single source or from a combination of sources. It is however preferred that the fat comprises partially hydrolysed milk fat. It is particularly preferred that the milk fat is anhydrous milk fat.

The dietary supplements of the invention will also include other conventional nutritive components such as a carbohydrate source, texture modifiers, sweeteners and flavouring agents to enhance palatability. The dietary supplements may also include a suitable antioxidant, such as Vitamin E, butylated hydroxy toluene or butylated hydroxy anisole.

The dietary supplement of the present invention can be provided in many forms - solid, semisolid or liquid. For example, the dietary supplement may be provided in the form of a liquid, as a ready to drink supplement. It may also be provided in a dried form, such as a powder or granules, suitable for reconstitution as a drink by addition to a liquid such as water or milk. Alternatively, the dietary supplement may be in the form of a solid, such as a snack bar.

### Partially hydrolysed fat

The preferred high energy dietary supplements according to the present invention may be prepared by first obtaining partially hydrolysed fat. The partially hydrolysed fat can be obtained from any source, including a commercial source if available. It can also be specifically produced for preparation of the dietary supplements of the invention by any suitable hydrolysis process. Where, as is preferred, the fat is milk fat, the partially hydrolysed fat may conveniently be prepared by heating milk fat, in the presence of a suitable base, for a sufficient time and at a suitable temperature to bring about partial hydrolysis of the milk fat, that is, to remove esterified fatty acids from the glycerol backbone of the triglycerides.

Milk fat contains a high proportion of medium and short chain fatty acids, including butyric acid. It is preferred that the hydrolysis conditions are such as to avoid the selective removal of butyric acid from the milk fat triglycerides, in order to prevent the partially hydrolysed fat having an offensive odour of butyric acid. The hydrolysis conditions, therefore, are preferably chosen so to minimise the release of butyric acid with respect to the total degree of hydrolysis.

It is particularly preferred that the milk fat is anhydrous milk fat, and that this is heated to 85°C. Sodium hydroxide may conveniently be used to hydrolyse the milk fat, and is generally added in an amount of 0.4% by weight. It has been found that a reaction time of 6-7 hours, preferably 6.5 hours, will bring about a desirable level of partial hydrolysis of the milk fat. These reaction conditions have been found to effect minimal release of butyric acid.

After the partial hydrolysis has taken place, the hydrolysate is usually filtered to remove unreacted sodium hydroxide, and neutralised to pH 7, with a suitable non-toxic acid. It is preferred that lactic acid is used, preferably at least 88% by weight lactic acid, but other suitable acids will be apparent to those skilled in the art.

### Products

Various embodiments of the invention are described in more detail below. In all of these embodiments, the fat is partially hydrolysed anhydrous milk fat.

### 1. Liquid supplement suitable for people with lactose intolerance

In one preferred embodiment of the invention, the dietary supplement is a liquid supplement, which is suitable for consumption by people having lactose intolerance.

A presently preferred emulsification system for this liquid dietary supplement consists of a mixture of monoacetyl and diacetyl tartaric acid ester of mono and diglycerides, glycerol monostearate, lecithin and concentrated medium chain triglycerides, although other suitable non-toxic emulsifiers will be apparent to those skilled in the art. It is also preferred that these preferred emulsifiers are present in the following proportions (relative to the total amount of emulsifier): 65.2% concentrated medium chain triglycerides, 17.4% glycerol monostearate, 13.0% monoacetyl and diacetyl tartaric acid ester of mono/diglycerides, and 4.3% lecithin. The monoacetyl and diacetyl tartaric acid esters of mono/diglycerides preferably contain 27-30% total tartaric acid and 21-23% total acetic acid, and are referred to as Datem. A suitable source of these is that known as Lamegin DW 8000™ (which contains 80% Datem and 20% tricalcium phosphate as an anti-caking agent).

The concentrated medium chain triglycerides, as well as having some emulsification properties, improve get-away of the dietary supplement by further lowering the average melting point of the fat. This assists in reducing mouth coating. In addition, medium chain triglycerides are metabolised via a different pathway than normal triglycerides and provide a more rapid source of energy. A preferred concentrated medium chain triglyceride blend contains approximately 30% capric acid and approximately 70% caprylic acid.

The emulsifiers are preferably present in a combined amount of 35.4% by weight of the partial ly hydrolysed anhydrous milk fat (or 26.1 % of the combined weight of the emulsifier and partially hydrolysed anhydrous milk fat). It is also preferred that the partially hydrolysed anhydrous milk fat incorporating the emulsifiers is present in an amount of 8.8% by weight of the dietary supplement.

The additional components of the liquid composition are preferably maltodextrin (preferably in an amount of 9.0% by weight of the liquid composition), milk protein isolate (preferably in an amount of 5.0% by weight), sodium citrate (preferably in an amount of 0.4% by weight), maltol (preferably in an amount of 0,1% by weight), flavour (preferably in an amount of 0.4% by weight) and water (preferably in an amount of 69.5% by weight). Although by no means essential, it is preferred that the maltodextrin used is Maltrin M200™ (dextrose equivalent 20), as this has been found to provide a superior mouth feel to Maltrin M100™ (dextrose equivalent 10) and Maltrin M050™ (dextrose equivalent 5).

The milk protein isolate assists in emulsification of the fat. A preferred milk protein isolate is the product known as TMP1180™, which is a spray dried soluble protein, containing both whey proteins and casein (as a caseinate). It is highly soluble, with good emulsifying properties and water binding properties. It has a typical composition as follows: 92.0% w/w protein (as is), 3.6% w/w ash, and 4.1%w/w moisture.

A dietary supplement according to the above formulation is believed to be suitable for use as a ready-to-drink product, for example as a UHT drink.

### 2. Liquid supplement containing lactose

In an alternative embodiment of the invention, the dietary supplement is also in the form of a liquid. However, in this embodiment, the additional components are preferably whole milk (preferably present in an amount of 77%-83% by weight), skim milk powder (preferably in an amount of 7.3%-8.3% by weight), fructose (preferably in an amount of 3.9%-4.1% by weight), cocoa (preferably in an amount of 0.95%-1.95% by weight), cocoa flavour (preferably in an amount of 0.75% by weight), sodium citrate (preferably in an amount of 0.60% by weight), and carboxy methyl cellulose (preferably in an amount of 0.30% by weight). In this embodiment of the invention, the partially hydrolysed anhydrous milk fat and the emulsifier are preferably together present in a combined amount of 5%-6%, more preferably 5.1% by weight of the dietary supplement.

### 3. Dried drink base formulation

In an alternative embodiment of the invention, the dietary supplement is provided in a dry form, such as a powder or granules, as a drink base. Such a drink base may consist of a liquid formulation according to the present invention, such as the formulations described immediately above, which has been dried (for example, spray dried). Alternatively, such a drink base may consist of a mixture of partially hydrolysed fat and other, dry ingredients, which has been prepared by simply mixing these ingredients together. The drink base is reconstituted with a suitable liquid such as water or milk, to provide the dietary supplement in ready-to-drink form.

### 4. Snack bar

In other preferred embodiments of the invention, the high energy dietary supplements of the present invention are in the form of a solid, the partially hydrolysed milk fat being incorporated, for example, into a snack bar.

In this embodiment of the invention, it is preferred that the partially hydrolysed milk fat (excluding emulsifier) is present in an amount of 20.24% by weight of the snack bar. It is particularly preferred that the emulsifier is present in an amount of 26.4% by weight of the partially hydrolysed milk fat (or 20.9% of the combined weight of the glycerol monostearate and partially hydrolysed milk fat).

In this embodiment, the preferred emulsifier is glycerol monostearate, which has a hydrophilic lipophilic balance (HLB) of 4.4, although again other suitable emulsifiers will be apparent to those skilled in the art. It is also preferred that the glycerol monostearate has a residual soap content of 2% - a residual soap content of 2% has been found to significantly increase the firmness and emulsion stability of the snack bar of the invention when compared with a glycerol monostearate having only a 0.3% residual soap content. It is preferred that the glycerol monostearate be present in an amount of 4.7% to 6.9% by weight of the snack bar, more preferably 5.34% by weight.

It is also particularly preferred that the dietary supplement in this embodiment further includes the following components: fructose (preferably in an amount of 17.0% to 22.09% by weight, more preferably 22.09%), glucose syrup (preferably in an amount of 20.5% to 21.06% by weight, more preferably 21.06%), whey proteins (preferably Alacen 152™ and Alacen 312™, in amounts of 10.0% to 10.6%, more preferably 10.27%, and 6.2% to 6.4%, more preferably 6.37% by weight, respectively), modified starch (preferably in an amount of 5.0% to 7.2%, more preferably 6.99%, by weight), water (preferably in an amount of 3.29% by weight), maltodextrin (preferably Maltrin M100™ in an amount of 2.0% to 4.4%, more preferably 2.26% by weight), sodium citrate (preferably in an amount of 0.3% to 1.0%, more preferably 0.62% by weight), citric acid (preferably in an amount of 0.2% to 0.5%, more preferably 0.41% by weight), carrageenan (preferably in an amount of 0.1% to 1.0%, more preferably 0.41% by weight), calcium citrate (preferably in an amount of 0.05% to 0.16%, more preferably 0.08% by weight), maltol (preferably Veltol™, in an amount of 0.15% by weight) and flavour (preferably vanilla, in an amount of 0.3% to 0.8%, more preferably 0.41 % by weight).

The product known as Alacen 312™ is a whey protein concentrate that possesses good emulsifying properties. Alacen 152™ is a whey protein that will form a firm gel at low temperatures. A typical composition for each of these products is as follows: 80.0% w/w protein (as is), 5.5% w/w carbohydrate, 5.9% w/w minerals, 4.0% w/w moisture, and 4.6% w/w fat.

A preferred modified starch is that known as Avon TB840™, which is a thin boiling starch manufactured by acid treatment of refined starch.

Optionally, the high energy dietary supplement in the solid form can include other ingredients which increase bar firmness, such as peanuts, desiccated coconut, oat bran and/or dehydrated potato flakes. It will be appreciated that if such ingredients are added, the amount of partially hydrolysed fat present may need to be adjusted to ensure that at least 40% of the total energy provided by the dietary supplement is provided by fat.

### Examples

The present invention is further illustrated by the examples which follow.

### Example 1

Anhydrous milk fat was heated to 85°C and 0.4% anhydrous sodium hydroxide was added. This was held at 85°C ± 5°C for 6.5 hours and neutralised to pH 7 with 88% lactic acid. At the completion of hydrolysis, 4.19% of polyoxyethylene-20-sorbitan monostearate was added, at a temperature of not less than 55°C.

The partially hydrolysed milk fat and other dry ingredients were premixed in a ribbon mixer until homogenous. This premix was added to liquid whole milk, homogenised and heat treated using a standard UHT process.

The final liquid formulation was as follows:

| **Component** | % **(By Weight)** |
|---|---|
| skim milk powder | 7.8 |
| fructose | 4.0 |
| cocoa | 1.45 |
| whole milk | 80.0 |
| cocoa flavour | 0.75 |
| carboxy methyl cellulose | 0.30 |
| partially hydrolysed anhydrous | |
| milk fat (incorporating emulsifier) | 5.1 |
| sodium citrate | 0.60 |

The above formulation was determined to provide 48.6% of its total energy from fat, 31.4% from carbohydrate and 19.2% from protein.

### Example 2

The formulation of the high energy liquid dietary supplement was as follows:

| **Component** | **% By Weight** |
|---|---|
| maltodextrin (Maltrin M200™) | 9.0% |
| fructose | 6.8% |
| milk protein isolate (TMP1 180™) | 5.0% |
| sodium citrate | 0.4% |
| partially hydrolysed milk fat | 8.8% |
| plus emulsifiers | |
| maltol | 0.1% |
| flavour | 0.4% |
| water | 69.5% |

### Method of preparation:

Anhydrous milk fat was heated to 85°C and 0.4% anhydrous sodium hydroxide was added. This was held at 82.5°C i2.5 C for 6.5 hours, then filtered and neutralised to pH 7.0 with 90% (w/w) lactic acid.

The dry ingredients were premixed and dispersed in water at a temperature of 80°C. The emulsifier blend (containing 65.2% concentrated medium chain triglycerides, 17.4% glycerol monostearate, 13.0% diacetyl tartaric acid ester of mono/diglycerides and 4.3% lecithin) was added to the partially hydrolysed milk fat and heated to 70°C. The fat and emulsifiers were then mixed in with the water phase and homogenised. The maltol and flavour were then added and the mixture was homogenized and heat treated using a standard UHT process.

### Example 3

The high energy dietary supplement, which was in the form of a snack bar, had the following formulation:

| **Component** | **% (By Weight)** |
|---|---|
| fructose | 22.09% |
| glucose syrup | 21.06% |
| partially hydrolysed anhydrous | |
| milk fat | 20.24% |
| whey protein (Alacen 152™) | 10.27% |
| modified starch (TB840™) | 6.99% |
| whey protein (Alacen 312™) | 6.37% |
| glycerol monostearate | 5.34% |
| water | 3.29% |
| maltodextrin (Maltrin M100™) | 2.26% |
| sodium citrate | 0.62% |
| citric acid | 0.41% |
| carrageenan | 0.41 % |
| calcium citrate | 0.08% |
| maltol (Veltol™) | 0.15% |
| vanilla flavour | 0.41 % |

### Method of preparation:

Anhydrous milk fat was heated to 85°C and 0.4% anhydrous sodium hydroxide was added.This was held at 82.5°C ±2.5°C for 6.5 hours, then filtered and neutralised to pH 7.0 with 90% (w/w) lactic acid.

The glucose syrup, partially hydrolysed anhydrous milk fat, glycerol monostearate and water were heated to 70°C. The dry ingredients were premixed, added to the fat mixture and the mixture stirred until the ingredients were mixed in. The mass was heated for ten minutes at 80°C and stirred occasionally. The mass was removed from the heat, the vanilla and maltol added and mixed gently. It was then poured and rolled into a thickness of 1.0 cm. When cold, the mass was cut to a width of 4.2 cm and a length of 12.5 cm.

The snack bar was determined (using the Atwater conversion figures) to provide 49.6% of its total energy from fat, 39.4% from carbohydrate and 11% from protein.

### INDUSTRIAL APPLICABILITY

The Applicants have found that the dietary supplements of the present invention, although providing a relatively high proportion (i.e from 40% to 55%) of their energy from fat, are surprisingly palatable and do not cause gastrointestinal distress to endurance athletes. These dietary supplements therefore provide a very concentrated source of energy without the associated disadvantages of traditional high-fat foods. Without wishing to be bound by any theory, it is believed that the partial hydrolysis of the fat exposes a number of hydrophilic groups which facilitates emulsification in the nutritive composition. This in turn facilitates the ease of formulation of the composition into products having a palatable mouth feel and homogenous flavour distribution.

In addition, again without wishing to be bound by any theory, it is believed that the high energy dietary supplements of the present invention have a reduced residence time in the stomach because the fat is already in a partially hydrolysed form, thus reducing the amount of hydrolysis which needs to take place in the stomach. Therefore, the free fatty acids obtained from triglyceride hydrolysis are able to pass more quickly from the stomach to the duodenum, which is where fat digestion occurs. The increased rate of digestion of the fat will give a quick energy boost.

Also, a problem with non-modified fat is that the long gut residence time has the effect of diverting blood from the muscles, to the stomach, which is liable to cause cramp in endurance athletes. Therefore, reducing the gut residence time of the fat, by using the dietary supplements of the present invention which include partially hydrolysed fat, will have the effect that less blood is diverted from the muscles to the stomach.

It is therefore believed that the novel high energy dietary supplements of the present invention, which may be in the form of a liquid, a semi-solid or a solid such as a snack bar, will find particular acceptance among endurance athletes as a concentrated source of energy which is able to be digested relatively easily.

## Claims

1. A high energy dietary supplement containing fat which is at least partially hydrolysed, and one or more non-toxic emulsifiers, wherein from 48-50% of the total energy of the supplement is provided by the fat and emulsifiers.

2. A high energy dietary supplement as claimed in claim 1 which further includes a carbohydrate source, a texture modifier, a sweetener and a flavouring agent.

3. A high energy dietary supplement as claimed in claim 1 or claim 2, wherein the supplement is in the form of a liquid.

4. A high energy dietary supplement as claimed in claim 3 wherein the fat source includes the following emulsifiers: monoacetyl and diacetyl tartaric acid ester of mono/diglycerides, glycerol monostearate, lecithin and concentrated medium chain triglycerides.

5. A high energy dietary supplement as claimed in claim 4 wherein the emulsifiers are present in the following relative amounts: 65.2% concentrated medium chain triglycerides, 17.4% glycerol monostearate, 13.0% mono and diacetyl tartaric acid ester of mono/diglycerides and 4.3% lecithin.

6. A high energy dietary supplement as claimed in claim 5 wherein the emulsifiers are present in a combined amount of 35.4% by weight of the partially hydrolysed fat.

7. A high energy dietary supplement as claimed in claim 6 wherein the emulsifiers and the partially hydrolysed fat are present in a combined amount of 8.8% by weight of the supplement.

8. A high energy dietary supplement as claimed in claim 7 which further includes water, maltodextrin, fructose, milk protein isolate, sodium citrate, maltol and a flavouring component.

9. A high energy dietary supplement as claimed in any one of claims 1 to 4 which is in the form of a dry drink base suitable for addition to a liquid to provide a reconstituted drink.

10. A high energy dietary supplement as claimed in claim 9 which has been prepared by spray drying a liquid high energy dietary supplement as claimed in any one of claims 3 to 8.

11. A high energy dietary supplement as claimed in any one of claims 1 to 4, wherein the supplement is in the form of a snack bar.

12. A high energy dietary supplement as claimed in claim 14, wherein the fat source includes glycerol monostearate as emulsifier.

13. A high energy dietary supplement as claimed in claim 12, wherein the glycerol monostearate has a residual soap content of 2%.

14. A high energy dietary supplement as claimed in claim 13, wherein the glycerol monostearate is present in an amount of 26.4% by weight of the partially hydrolysed fat.

15. A high energy dietary supplement as claimed in any one of claims 12 to 14, wherein the partially hydrolysed fat is present in an amount of 20.24% by weight of the snack bar.

16. A high energy dietary supplement as claimed in any one of claims 12 to 15, which further includes the following components: fructose, glucose syrup, whey proteins, modified starch, water, maltodextrin, sodium citrate, citric acid, carrageenan, calcium citrate, maltol and flavour.
